# EUROPÄISCHE PATENTSCHRIFT

(11) **EP 2 192 686 B1**
(45) Veröffentlichungstag und Bekanntmachung des Hinweises auf die Patenterteilung: **20.04.2016**
(21) Anmeldenummer: 09175827.6
(22) Anmeldetag: 12.11.2009
(51) Int. Cl.: H02P 23/14, H02P 25/02, H02P 6/18

(54) **Verfahren und Vorrichtung zur wiederholten Bestimmung dynamischer Größen eines n-phasigen Synchronmotors mittels analoger EMK-Messung**
Method and device for repeated determination of dynamic quantities of an n-phase synchronous motor using analogue EMK measurement
Procédé et dispositif de détermination répétée de tailles dynamiques d'un moteur synchrone à phases n à l'aide d'une mesure EMK analogique

(30) Priorität: 26.11.2008 DE 102008059052
(43) Veröffentlichungstag der Anmeldung: 02.06.2010
(73) Patentinhaber: LTi DRiVES GmbH, 35633 Lahnau (DE)
(72) Erfinder: Visosky, Johannes, 35096, Weimar (DE); Hebing, Ludger, 35614, Aßlar (DE)
(74) Vertreter: Tappe, Hartmut

(56) Entgegenhaltungen:
- EP-A2- 0 993 108
- US-A1- 2004 041 530
- US-B1- 6 274 991

## Beschreibung

Die Erfindung betrifft ein Verfahren und eine Vorrichtung zur wiederholten Bestimmung dynamischer Größen eines n-phasigen Synchronmotors, insbesondere des Rotorwinkels ϕ, Rotorfrequenz ω oder Rotorbeschleunigung α. Hierzu werden die induzierten Motorphasenspannungen in jeder Bestimmungsphase gemessen und die Verfahrensschritte des Patentanspruchs 1 durchgeführt. Die erfindungsgemäße Vorrichtung umfasst dabei die Merkmale des Patentanspruchs 7.

In der Antriebstechnik werden vielfach permanentmagneterregte Synchronmotoren eingesetzt. Diese Motoren können besonders schwingungsarm und mit hohem Wirkungsgrad betrieben werden, wenn über eine Recheneinheit und einer Ansteuerschaltung sinusförmige Ströme in die Motorphasen eingeprägt werden. Diese Recheneinheit benötigt jedoch eine kontinuierliche Information über die Lage des Rotors relativ zum Stator. Diese Lageinformation wird für gewöhnlich durch am Motor angebrachte Sensoren gewonnen, beispielsweise mittels Hallsonden, Inkrementalgeber, Resolver oder ähnliches.

Bei vielen kostensensitiven oder robusten Anwendungen ist es vorteilhaft, auf die Sensoren gänzlich zu verzichten. Hierzu ist aus dem Stand der Technik bekannt, die Lageinformation rechnerisch anhand der auf die Motorphasen aufgeschalteten Spannungen und anhand der in den Motorphasen fließenden Ströme kontinuierlich zu berechnen. Nachteilig daran ist, dass im Stillstand des Motors und bei relativ geringen Drehzahlen dieses Verfahren entweder keine oder nur sehr ungenaue Informationen über die dynamischen Größen liefert.

Hierzu ist für den Einsatz von blockkommutierten Motoren aus der US 7,141,949 B2 bekannt, eine Detektion der EMK-Nulldurchgänge (EMK = vom Motormagneten in die Motorwicklung induzierte Spannung) an den jeweils nicht bestromten Phasen mittels einer Komparator-Auswertung durchzuführen. Gewöhnlicherweise werden hierzu 3-phasige Motoren verwendet, wobei im blockkommutierten Betrieb jeweils eine Phase unbestromt bleibt. An dieser unbestromten Phase wird mittels einer Komparator-Schaltung binär festgestellt, ob die induzierte Spannung eine gewisse Größe erreicht hat oder nicht, so dass man von einer binären Auswertung der dynamischen Größen sprechen kann.

Dieses Verfahren kann jedoch nicht bei sinuskommutierten Motoren verwendet werden, da in jeder Motorphase ein kontinuierlicher Stromfluss eingeprägt wird. Des Weiteren birgt eine binäre Auswertung mittels eines Komparators den Nachteil, dass die verwendeten Komparatoren eine gewisse Offsetspannung an ihren Eingängen aufweisen, so dass die Schaltschwelle nicht genau im Nulldurchgang der auszuwertenden Spannung liegt. Aus Gründen der Störsicherheit ist es in der Regel erforderlich, an den Komperatoren eine Schalthysterese vorzusehen. Diese vergrößert den Winkelfehler und erhöht die erforderliche Mindestdrehzahl zusätzlich. Die Offsetspannung des Komparators führt in der Regel bei kleinen Drehzahlen, die bereits zur Detektion der aus dem Stand der Technik bekannten Schaltung ausreichen, zu einem erheblichen Winkelfehler, so dass unterhalb einer gewissen Mindestdrehzahl das aus dem Stand der Technik bekannte Verfahren nicht anwendbar ist.

Dabei ist eine Verstärkung des Signals vor dem Komparator keine Lösung des Problems, da ein realer Verstärker ebenfalls eine Offsetspannung aufweist, welche ebenfalls verstärkt wird. Insbesondere Motoren mit hohem Trägheitsmoment, beispielsweise Turbomolekularpumpen oder Antriebe mit hoher Reibung haftet das Problem an, mittels Stromeinprägung in die Motorwicklung bei fehlender Kenntnis der Rotorlage die Mindestdrehzahl zu erreichen.

Hinzu kommt das Problem, dass je nach Anfangsposition des Rotors ein sehr großer Drehwinkel erforderlich ist, bis der nächste vom Komparator detektierbare Nulldurchgang auftritt, d.h. die Rotorposition kann nicht kontinuierlich bestimmt werden. Somit liegt nur eine ungenaue Information über den Rotorwinkel vor, so dass kein optimaler Betrieb des Synchronmotors erreicht werden kann. Bei Vorhandensein von Reibung kann es in praktischen Fällen vorkommen, dass die Motorwelle vor dem nächsten Nulldurchgang der EMK stehen bleibt.

Die EP 0993 108 A2 beschreibt ein Verfahren zur sensorlosen Ermittlung der Rotorstellung von sinuskommutierten Synchronmotoren mittels Messung der in den Statorwicklungen induzierten EMKs, um den Synchronmotor auf einen optimalen Wirkungsgrad zu regeln. Dazu wird in dem quasi-sinusförmigen oder sinusförmigen Stromverlauf kurzzeitig eine künstliche Stromlücke geschaffen, in der nach Abklingen des Statorstroms die in der Statorwicklung durch die Drehung des Rotors induzierte Spannung gemessen wird.

Ausgehend von diesem Stand der Technik ist es Aufgabe der vorliegenden Erfindung, ein Verfahren und eine Vorrichtung zur Bestimmung dynamischer Größen eines n-phasigen Synchronmotors vorzuschlagen, der die oben genannten Nachteile des Stands der Technik überwindet und mit relativ geringem Hardwareaufwand eine schnelle und präzise Ermittlung der dynamischen Größen selbst bei geringen Drehzahlen ermöglich. Des Weiteren ist es Aufgabe der Erfindung, einen äußerst geräuscharmen Betrieb des Synchronmotors zu erzielen. Daneben ist es Aufgabe der Erfindung, selbst im unbestromten Zustand des Synchronmotors die dynamischen Größen so zu ermitteln, dass eine Aufsynchrönisierung, das heißt eine Wiederaufnahme der Bestromung der Ansteuerschaltung abgestimmt auf die Rotationslage des Synchronmotors, zu ermöglichen. Des Weiteren ist es Aufgabe der Erfindung, eine Motordiagnose, beispielsweise zur Ermittlung des Zustands der Permanentmagnete des Synchronmotors vorzuschlagen.

Diese Aufgabe wird durch ein Verfahren nach dem Patentanspruch 1 und durch eine Vorrichtung nach dem Patentanspruch 7 gelöst. Vorteilhafte Ausgestaltungen der Erfindung sind Gegenstand der Unteransprüche.

Das erfindungsgemäße Verfahren zur wiederholten Bestimmung dynamischer Größen eines n-phasigen Synchronmotors, insbesondere Rotorwinkel ϕ, Rotorfrequenz ω oder Rotorbeschleunigung α des Motors wird mittels Messung von induzierten Motorphasenspannungen in jeder Bestimmungsphase durch folgende Schritte durchgeführt:
▪ Bestromung des Synchronmotors durch eine sinuskommutierende Ansteuerschaltung,
▪ kurzfristige Unterbrechung der Bestromung von mindestens zwei Motorphasen des Synchronmotors für einen Messzeitraum *T*_{M}, bis deren magnetische Energie abgeklungen ist, um in diesem Messzeitraum *T*_{M} die Motorphasenspannungen zu messen,
▪ Messung der Motorphasenspannungen in den mindestens zwei Motorphasen des Synchronmotors mittels einer analogen Messverstärkerschaltung zu Erzeugung von Motorphasenmessspannungen zum Messzeitpunkt *t*ₘ, wobei die Messverstärkerschaltung eine einstellbare Verstärkung oder Abschwächung aufweist, so dass insbesondere in Abhängigkeit der Motorphasenspannungen (U_{U}, U_{V}, U_{w}) und/oder den bisher bestimmten dynamischen Größen eine Messverstärkung eingestellt wird,
▪ A/D-Wandlung der analogen Motorphasenmessspannungen im Messzeitpunkt *t*ₘ zur Bestimmung digitaler Motorphasenspannungsmesswerte,
▪ Berechnung der dynamischen Größen auf Basis der gemessenen digitalen Motorphasenspannungsmesswerte mittels einer Recheneinheit,
▪ phasenrichtige Aufschaltung der Bestromung des Synchronmotors.

Somit erfolgt die Messung der EMK analog statt binär mit Hilfe einer Messverstärkerschaltung, wobei die analogen Messwerte in digitale Messwerte mit Hilfe einer A/D-Wandlung umgesetzt werden. Hierfür wird kurzfristig die sinusförmige Stromeinprägung von der Ansteuerschaltung in die Motorphasen unterbrochen. Zur Digitalisierung der Messwerte wird eine hochauflösende A/D-Wandlung verwendet, wobei hierfür meist keine Mehrkosten entstehen, weil viele in der Antriebstechnik verwendeten Mikrocontroller über eine ausreichende Anzahl von A/D-Wandlerkanälen mit hoher Auflösung verfügen. Die Offsetproblematik der analogen Spannungsmessung kann hierbei dadurch umgangen werden, dass der Referenzpegel für die Messung hinter der A/D-Wandlung digital vom Mikrocontroller abgeglichen werden kann. Da mehrere Motorphasen, insbesondere mindestens zwei ausgewertet werden, steht für die Zeit der unterbrochenen Stromeinprägung stets eine kontinuierliche und zumindest genügend genau abgetastete Lageinformation zur Verfügung. Es muss daher zur Bestimmung der dynamischen Größen nicht auf den nächsten Nulldurchgang der EMK gewartet werden, so dass eine hohe Detektionsgenauigkeit erreicht wird. Eine geringfügige, durch Drehstrom-Einprägung mit willkürlich gewählter Phasenlage verursachte Anfangsbewegung des Rotors, die auch rückwärts gerichtet sein kann, ist schon ausreichend, um aufgrund der Messergebnisse mit Hilfe der Recheneinheit eine Lagedetektion und darauf basierende phasenrichtige Stromeinprägung sicherzustellen. Bei geringen Motordrehzahlen werden von der Recheneinheit in gewissen Zeitabständen zur Korrektur der phasenrichtigen Stromeinprägung Messungen veranlasst. Die benötigte Messzeit *T_{M}* ist im Verhältnis zur Stromflusszeit so kurz, dass die Unterbrechung des Stromflusses keine nennenswerte Drehmomenteinbuße zur Folge hat. Die durch die kurzfristige Stromunterbrechung verursachte Geräuschbildung ist wesentlich geringer als bei blockkommutierten Antrieben, beispielsweise den aus der US 7,141,949 B2 bekannten Verfahren, da bei diesen prinzipiell im gesamten Drehzahlbereich der Strom mehrmals pro Motorumdrehung mit hoher Änderungsgeschwindigkeit ausgeschaltet und von einer Motorphase auf die nachfolgende Motorphase kommutiert wird. Prinzipbedingt haben sinuskommutierte Antriebe insbesondere mit der vorgeschlagenen Erfindung eine sehr geringe Geräuschentwicklung, da die Bestromungsunterbrechung nur kurz gegen die Bestromungsdauer ist und phaserichtig wieder aufgeschaltet wird, so dass die Umsetzung dieses Verfahrens einen geräuschgedämpften Antrieb des Synchronmotors ermöglicht.

Prinzipiell wird dieses Verfahren kontinuierlich, d.h. wiederholend durchgeführt, um die dynamischen Größen laufend zu aktualisieren. Dies bedeutet, dass die zeitlichen Abstände der einzelnen Bestimmungsphasen dynamisch an die Drehzahl des Motors angepasst werden können.

Das erfindungsgemäße Verfahren kann prinzipiell über den gesamten Drehzahlbereich des Synchronmotors ausgeführt werden. Aus dem Stand der Technik sind jedoch bei genügend hohen Drehzahlen andere Verfahren bekannt, bzw. die Rotationslage ergibt sich dann aus Kenntnis der eingeprägten Motorphasenspannungen und gemessenen Motorströme. Aus diesem Grund ist es vorteilhaft, dass das Verfahren bis zur Erweichung einer Grenzmotorfrequenz ωₘ des Synchronmotors ausgeführt wird, und nach Überschreiten der Grenzmotorfrequenz ωₘ die dynamischen Größen bei nichtunterbrochener Bestromung ermittelt werden, wie dies bereits aus dem Stand der Technik bekannt ist. Somit wird das Verfahren nur in niedrigen Drehzahlbereichen ω< ωₘ, insbesondere beim An- und Abfahren des Motors durchgeführt.

Grundsätzlich kann das Verfahren bereits bei Messung der induzierten Motorspannungen zweier Motorphasen durchgeführt werden. Besonders vorteilhaft ist jedoch die Anwendung des Verfahrens bei Messung aller verfügbaren Motorspannungen des n-phasigen Synchronmotors, um eine möglichst präzise Bestimmung der dynamischen Größen zu erreichen. Da ein Synchronmotor in den meisten Fällen drei Motorphasen aufweist, bedeutet dies, dass eine Messung aller drei Motorphasenspannungen eine höchstmögliche Genauigkeit liefert und daher zu bevorzugen ist.

Das Verfahren beruht darauf, dass in gewissen zeitlichen Abständen die Bestromung des Motors unterbrochen wird, und für eine Messdauer *T*ₘ das Abklingen der magnetischen Energie der Motorphasen abgewartet wird, um dann zu einem Messzeitpunkt *t*ₘ innerhalb der Messdauer *T*ₘ eine Messung der Motorphasenspannungen durchzuführen. Dabei ist zum einen vorteilhaft möglich, dass der Messzeitraum *T*ₘ der kurzfristigen Unterbrechung der Bestromung und der Messzeitpunkt *t*ₘ je nach Motortyp vorbestimmt sind, daneben ist es ebenfalls vorteilhaft möglich, dass der Messezeitraum *T*ₘ der kurzfristigen Unterbrechung der Bestromung und der Messzeitpunkt *t*ₘ in jeder Bestimmungsphase neu bestimmt werden. Im letztgenannten Fall kann dabei vorteilhafterweise der Messzeitraum *T*ₘ der kurzfristigen Unterbrechung der Bestromung und der Messzeitpunkt *t*ₘ durch Messung der Motorphasenströme und/oder den bisher bestimmten dynamischen Größen bestimmt werden. Beispielsweise kann dabei durch Beobachtung der Motorphasenströme der energiefreie Zustand der Motorphasen durch Abklingen der magnetischen Energie festgestellt werden. Darüber hinaus kann zum Beispiel ein Motorkennfeld, das die Kenngrößen des Motors widerspiegelt, dazu dienen, den Messzeitraum und den Messzeitpunkt vorzubestimmen.

Die Messung der Motorphasenspannungen erfolgt erfindungsgemäß durch Verwendung einer Messstärkerschaltung. Dabei hängt die Größe der EMK, das heißt der induzierten Motorphasenspannung von den dynamischen Größen des Motors, insbesondere der Drehzahl ab. Da drehzahlabhängig verschiedene Motorphasenspannungen auftreten, ist es besonders vorteilhaft, dass die Messverstärkerschaltung eine einstellbare Verstärkung oder Abschwächung aufweist, so dass insbesondere in Abhängigkeit der Motorphasenspannungen und/oder den bisher bestimmten dynamischen Größen eine solche Messverstärkung bzw -dämpfung eingestellt werden kann, so dass eine möglichst hohe Aussteuerung der nachgeschalteten A/D-Wandler selbst bei kleinen oder zu großen Messgrößen erreicht wird. Die Verstärkung dient daher der Anspassung der Meßgrößen an den Auflösungsbereich der nachgeschalteten Messvorrichtung und kann die Meßgrößen verstärken oder auch abschwächen, d.h. dämpfen.

Wie bereits oben angesprochen ermöglicht das Verfahren bei stromlosem Leerlauf des Synchronmotors, so dass die oben genannten Verfahrensschritte ohne den Schritt der Bestromung durchgeführt werden, eine Bestimmung der dynamischen Größen, so dass die Recheneinheit die Ansteuerschaltung so steuern kann, dass die Ansteuerschaltung auf die Motorfrequenz ω synchronisiert wird, und der Synchronmotor dadurch wieder in den Stromzustand versetzt werden kann (Aufsynchronisierung). Falls also der Motor antriebslos ohne Stromfluss dreht, weil zum Beispiel die Ansteuerschaltung ausgeschaltet ist, kann die Lageinformation nicht mehr rechnerisch gewonnen werden, weil keine Spannung auf die Motorwicklung aufgeschaltet wird und kein Motorstrom fliesst. Eine Anzeige der Drehzahl oder ein Wiedereinschalten der Ansteuerschaltung auf den drehenden Motor (Aufsynchronisierung) ist deshalb erfindungsgemäß einfach möglich, weil bei ausgeschalteter Ansteuerschaltung durch kontinuierliche Messung der EMK stets eine Lageinformation zur Verfügung steht. Vorteilhaft ist dabei die Verstärkung bzw. Abschwächung des Messverstärkers in mindestens zwei Stufen umschaltbar, damit einerseits bei kleinen Motordrehzahlen eine hohe Messempfindlichkeit vorhanden ist und andererseits bei hohen Motordrehzahlen eine Begrenzung der Messsignale vermieden werden kann. Auf diese Weise ist im gesamten Drehzahlbereich eine stoßfreie Aufsynchronisierung auf den drehenden Motor zu erreichen.

Obwohl eine Messung in nur zwei Motorphasen möglich wäre, wird vorteilhafterweise die EMK an allen Motorphasen gegen einen künstlichen Sternpunkt gemessen, wobei im Messverstärker eine analoge Filterung mit relativ hoher Grenzfrequenz zwecks Vermeidung von Aliasing erfolgt. Eine möglichst hohe Grenzfrequenz ist dabei im Interesse der Einschwingzeit vorteilhaft, weil sich so eine kurze Messzeit realisieren lässt. In der Recheneinheit erfolgt vorteilhaft zur Verbesserung des Störabstands eine Differenzbildung zwischen den Messwerten des A/D-Wandlers, so dass hier die sogenannte verkettete Spannung des Motors ausgewertet wird. In der Recheneinheit kann zusätzlich zur Verbesserung des Störabstands vorteilhaft eine an die Motordrehzahl angepasste und bezüglich der Einschwingzeit optimierte digitale Filterung erfolgen. Im Mikrocontroller kann vorteilhafterweise die durch die analoge und digitale Filterung verursachte Phasendrehung herausgerechnet werden.

Im Rahmen der Aufsynchronisierung ist es besonders vorteilhaft, wenn die Recheneinheit mit der Ansteuerschaltung mittelbar oder unmittelbar verbunden ist, und die Recheneinheit die Ansteuerschaltung zumindest während dem Aufsynchronisierungszeitraum steuert. Diesbezüglich kann die Recheneinheit identisch mit der üblichen Recheneinheit zur Steuerung der Ansteuerschaltung sein, dies spart Bauteilkosten und Aufwand.

Wie bereits oben angesprochen ist es besonders vorteilhaft, wenn innerhalb der analogen Messverstärkerschaltung oder nach der Analog/Digitalwandlung eine Tiefpassfilterung der Motorphasenspannungen vorgenommen wird. Diese Tiefpassfilterung kann durch analoge Bauteile, insbesondere Widerstand und Kondensator, oder auch digital beispielsweise durch ein FIR- oder IIR-Filter erfolgen. Zweck der analogen Filterung ist es insbesondere, hochfrequente Störgeräusche herauszufiltern und damit Aliasing zu vermeiden.

Um eine möglichst hohe Auflösungsgenauigkeit der digitalen Messwerte zu erreichen, ist es besonders vorteilhaft, dass während der Unterbrechung der Bestromung im Messzeitraum *T*_{M} und zumindest bei Messung der Motorphasenspannungen zum Messzeitpunkt *t*ₘ der Sternpunkt der Motorphasen auf ein Messpotential Um = U_{ref}/2 belegt wird, das in der Mitte des Aussteuerbereichs der A/D-Wandler liegt. Hierdurch wird eine optimale Ausnutzung der Auflösungsgenauigkeit des Wandlers erreicht.

In vielen praktischen Fällen ist die Ansteuerschaltung mit einer Bootstrapschaltung versehen, die dazu dient, eine Bootstrapspannung zur definierten Ansteuerung der oberen Transistoren bzw. IGBTs zur Verfügung zu stellen. Im Rahmen der kurzfristigen Unterbrechung der Motorphasenbestromung zur Ermittlung der dynamischen Größen stört dabei das anliegende Bootstrappotential. Daher ist es besonders vorteilhaft, dass bei Verwendung einer Bootstrapschaltung in der Ansteuerschaltung während der Unterbrechung der Bestromung im Messzeitraum *Tₘ* und zumindest bei Messung der Motorphasenspannungen im Messzeitpunkt *t*ₘ das Bootstrappotential U_{B} von den Motorphasen abgekoppelt wird. Dies bedeutet, da häufig in der Ansteuerschaltung die Spannungsversorgung der Treiber für die Ansteuerung der oberen Schalttransistoren durch eine Bootstrapschaltung sichergestellt wird, dass das Potential der Motorwicklung zum Messzeitpunkt *t*ₘ durch die Bootstrapschaltung nicht vorteilhaft festgelegt ist. Das Potential der Motorphasen bei ausgeschalteter Ansteuerschaltung hängt dabei von der Höhe der Bootstrapversorgungsspannung U_{B} und vom Ladezustand der Bootstrapkondensatoren ab. Daher wird vorteilhaft sichergestellt, dass die sich normalerweise durch die Bootstrapspannung einstellende nachteilige Gleichtaktaussteuerung der Messverstärkerschaltung umgangen wird, indem die Bootrstrapversorgungsspannung U_{B} während der Messung mit Hilfe eines einfachen elektronischen Schalters, beispielsweise eines MOSFET-Schalters abgetrennt wird.

Um bei kleinen Motordrehzahlen eine Messungenauigkeit infolge von Gleichtaktaussteuerung des Messverstärkers zu vermeiden, wird beispielsweise das Potential der Motorwicklung während der Messung mit Hilfe des Messverstärkers auf die Mitte des Aussteuerbereichs des Analog-/Digitalwandlers festgelegt (halbe Referenzspannung). Zwar ergibt sich bei höheren Drehzahlen aufgrund der Gleichrichtung der EMK an den Freilaufdioden der Ansteuerschaltung eine Potentialverschiebung, jedoch ist die daraus resultierende Gleichtaktaussteuerung unkritisch, da das Nutzsignal groß genug wird.

Da bei netzgespeisten Antrieben eine sichere Potentialtrennung zwischen Ansteuerschaltung und Recheneinheit in der Praxis gefordert wird, kann vorteilhafterweise für die Analog-/Digitalwandler eine ΣΔ-Wandlung eingesetzt werden, um die mindestens zwei, insbesondere n-Spannungsmeßwerte der Phasen des n-phasigen Synchronmotors in digitale Bitströme umzuwandeln.

Des Weiteren ist es im Rahmen des Verfahrens aufgrund der verbesserten Betriebssicherheit und schaltungstechnischen Trennung zwischen Leistungs- und Auswerteteil vorteilhaft möglich, dass die digitalen Motorphasenspannungsmesswerte galvanisch von der Messverstärkerschaltung getrennt zur Recheneinheit weitergeleitet werden kann. Hierzu ist es denkbar, dass die galvanische Trennung schon zwischen analoger Messverstärkerschaltung und A/D-Wandler, das heißt im analogen Messteil, oder im Digitalteil zwischen A/D-Wandler und Recheneinheit vollzogen werden kann.

Des Weiteren betrifft die Erfindung eine Vorrichtung nach dem Patentanspruch 8. Die Vorrichtung umfasst zur kontinuierlichen Bestimmung dynamischer Größen eines n-phasigen Synchronmotors, insbesondere Rotorwinkel ϕ, Rotorfrequenz ω oder Rotorbeschleunigung α mittels Messungen von induzierten Motorphasenspannungen, eine Ansteuerschaltung, eine Messverstärkereinrichtung und eine Recheneinheit, wobei die Messverstärkereinrichtung mindestens zwei Motorphasen analog misst, und die Vorrichtung des Weiteren einen mindestens zweikanaligen A/D-Wandler umfasst. Erfindungsgemäß ist die Vorrichtung dadurch gekennzeichnet, dass die Recheneinheit zumindest mittelbar so mit der Ansteuerschaltung und dem A/D-Wandler und der Messverstärkereinrichtung verbunden ist, dass während eines Messzeitraums *T*ₘ die Motorphasenspannungen gemessen und mittels der Messverstärkereinrichtung zum Messzeitpunkt *t*ₘ zu den analogen. Motorphasenmessspannungen verstärkt werden. Anschließend werden diese mittels des A/D-Wandlers im Messzeitpunkt *t*ₘ in digitale Motorphasenspan-Motorphasenspannungsmesswerte umgewandelt, auf deren Basis die Recheneinheit die dynamischen Größen ermittelt und phasenrichtig die Bestromung der Motorphasen wieder aufnimmt.

Vorteilhafterweise misst dabei die Messverstärkereinrichtung innerhalb des Messzeitraums *T*ₘ alle Motorphasenspannungen des Synchronmotors und der A/D-Wandler wandelt alle Motorphasenspannungen in digitale Motorphasenspannungsmesswerte zum Messzeitpunkt *t*ₘ um.

Die Vorrichtung umfasst des Weiteren vorteilhafterweise mindestens zwei Strommesseinrichtungen, um insbesondere die Motorphasenströme zu messen, und hieraus das Abklingen der magnetischen Energie der Motorphasen zu bestimmen. Die Erfassung der Abklingzeit der magnetischen Energie kann dazu dienen, um die Dauer des Messzeitraums *T*ₘ und den Messzeitpunkt *t*ₘ innerhalb des Messzeitraums *T*ₘ zu bestimmen und/oder bei Erreichung einer Rotorgrenzfrequenz ωₘ eine Umschaltung der Bestimmung der dynamischen Größen auf ein unterbrechungsfreies Messverfahren, beispielsweise beruhend auf den Messungen der Motorphasenspannungen und der Motorphasenströmen vorzunehmen.

Erfindungsgemäß weist die Vorrichtung eine Messverstärkereinrichtung mit einer einstellbaren Verstärkung oder Abschwächung auf, um insbesondere in Abhängigkeit der Größe der Motorphasenspannungen und/oder den bisher bestimmten dynamischen Größen eine für den Aussteuerbereich des A/D-Wandlers angepasste Messverstärkung einzustellen. Somit kann eine möglichst hohe Genauigkeit der Messerfassung durch Ausschöpfung des gesamten Messbereichs und einem hohen Signal/Rausch-Abstand sichergestellt werden.

Die zur Bestimmung der dynamischen Größen herangezogene Recheneinheit kann beliebig aufgebaut sein. Es ist jedoch besonders vorteilhaft, dass die Recheneinheit ein Mikrocontroller ist, insbesondere derjenige Mikrocontroller, der üblicherweise die Steuerung der Ansteuerschaltung übernimmt. Dies reduziert den Bauteilaufwand und senkt Kosten,

Wenn der Motor antriebslos ohne Stromfluss dreht, weil beispielsweise die Ansteuerschaltung ausgeschaltet ist, kann die Lageinformation nicht mehr rechnerisch gewonnen werden, da keine Spannung auf die Motorwicklungen aufgeschaltet wird und kein Motorstrom fließt. Wie bereits im Rahmen der Verfahrensvorstellung besprochen ist es daher bei der Vorrichtung besonders vorteilhaft, wenn die Recheneinheit die Lageinformation über die kontinuierlich ermittelte analoge Messung der Motorphasenspannungen im unbestromten Leerlauf erfasst, die Ansteuerschaltung auf die Rotorfrequenz ω synchronisiert, und den Synchronmotor in den bestromten Zustand versetzt (Aufsynchronisierung). Somit kann beispielsweise ein stillstandsloser Wiederanlauf des Motors aus dem unbestromten Leerlaufbetrieb ermöglicht werden. Auf diese Weise ist im gesamten Drehzahlbereich eine stoßfreie Aufsynchronisierung auf den drehenden Motor möglich.

Des Weiteren kann in der erfindungsgemäßen Vorrichtung in einem bevorzugten Ausführungsbeispiel die analoge Messverstärkerschaltung mit analogen Tiefpassfiltern für die Motorphasenmessspannungen ausgerüstet sein. Analog hierzu kann es vorteilhafterweise auch möglich sein, zwischen dem A/D-Wandler und der Recheneinheit ein digitales Filter anzuordnen, um die digitalen Motorphasenspannungsmesswerte einer Tiefpassfilterung zu unterziehen. Diese Filterung bereinigt die Messsignale von hochfrequenten Anteilen, die die Genauigkeit der Messung negativ beeinflussen.

Um eine möglichst genaue Messung der dynamischen Größen vorzunehmen ist es im Rahmen einer vorteilhaften Ausführungsform der Vorrichtung möglich, den Sternpunkt der Motorphasen zumindest zum Messzeitpunkt *t*ₘ auf ein Messpotential Um = U_{ref}/2 zu legen, dass in der Mitte des Aussteuerbereichs U_{ref} des A/D-Wandlers liegt. Somit wird eine Gleichtaktaussteuerung der Messverstärker vermieden und damit die Genauigkeit der Messung erreicht.

Ist in der Ansteuerschaltung eine Bootstrapschaltung vorgesehen, so wirkt sich das Bootstrappotential - wie oben dargestellt - negativ auf die Genauigkeit der Messung der EMK aus. Daher ist es vorteilhaft, dass in der Ansteuerschaltung während der Unterbrechung der Bestromung im Messzeitraum *T*ₘ und zumindest bei Messung der Motorphasenspannungen im Messzeitpunkt *t*ₘ das Bootstrappotential U_{B} von den Motorphasen mittels eines Schalters K₂ abgekoppelt wird. Dabei ist es beliebig, wie der Schalter ausgeformt ist, es kann sich hierbei insbesondere um einen elektronischen Schalter auf Halbleiterbasis handeln. Damit wird der negative Einfluss der Bootstrapschaltung auf die Genauigkeit der Messung eliminiert.

Des Weiteren kann vorteilhafterweise in der Vorrichtung ein Messwertespeicher vorgesehen sein, der mit der Recheneinheit verbunden ist, und der dynamische Größen und/oder digitale Motorphasenspannungsmesswerte vorangegangener Messzeitpunkte *t*ₘ speichert. Dies dient insbesondere dazu, zukünftige zu messende Größen vorherzusehen, bzw. ein Messprotokoll des dynamischen Betriebs des Motors anzulegen.

Wie bereits im Rahmen der Verfahrensbeschreibung angeklungen kann eine Ausführungsform der erfindungsgemäßen Vorrichtung vorteilhafterweise einer potentialen Trennschaltung umfassen, die entweder zwischen Messverstärkerschaltung und A/D=Wandler, das heißt im analogen Messteil, oder zwischen A/D-Wandler und Recheneinheit, das heißt im Digitalteil angeordnet ist, und die Messverstärkerschaltung galvanisch von der Recheneinheit trennt. Dies kann aus Sicherheitsgründen erforderlich serin.

Die A/D-Wandler können beliebig ausgeführt sein, dabei eignen sich insbesondere ΣΔ-Wandler, die besonders einfach und kostengünstig erhältlich sind, und eine schnelle A/D-Wandlung leisten.

Des Weiteren kann die Vorrichtung vorteilhafterweise eine Drehfrequenzanalysevorrichtung umfassen, die bei Erreichen einer Grenzrotorfrequenz ωₘ die Bestimmung der dynamischen Größen unterbrechungslos durch Messung und Analyse der Motorphasenspannungen und Motorphasenströme bestimmt. Hierzu ist es besonders naheliegend, die bereits oben angesprochenen Strommesseinrichtungen der Motorphasenströme zu verwenden, und die Daten der analog gewonnenen Messverstärkerschaltung zu nutzen, um bei Erreichen der Grenzrotorfrequenz ωₘ eine Umschaltung der Bestimmung der dynamischen Größen auf eine unterbrechungsfreie Messung vorzunehmen, die nur anhand der Motorphasenspannungen und -ströme die dynamischen Größen durch die Recheneinheit bestimmt.

Im Nachfolgenden wird die Erfindung anhand lediglich Ausführungsbeispiele zeigender Zeichnungen näher erläutert.

### Es zeigen:

- **Fig. 1:**: eine Ansteuerschaltung und eine Motorschaltung eines ersten Ausführungsbeispiels;
- **Fig. 2:**: eine analoge Messverstärkerschaltung eines Ausführungsbeispiels der Erfindung;
- **Fig. 3:**: ein Ablaufdiagramm eines Ausführungsbeispiels des erfindungsgemäßen Verfahrens;
- **Fig. 4:**: der Verlauf einer Motorphasenspannung, eines Motorphasenstroms und der Motor-EMK einer Motorwicklung bei Durchführung des erfindungsgemäßen Verfahrens;
- **Fig. 5:**: ein Diagramm der Motorphasenmessspannung im Messzeitraum *T*_{M};
- **Fig. 6:**: ein Blockdiagramm der signaltechnischen Verarbeitung nach einem Ausführungsbeispiel;
- **Fig. 7:**: ein Blockdiagramm der messtechnischen Verarbeitung zur Bestimmung der dynamischen Größen eines weiteren Ausführungsbeispiels;
- **Fig. 8:**: die Ansteuerschaltung eines weiteren Ausführungsbeispiels der vorliegenden Erfindung;
- **Fig. 9:**: ein Blockschaltbild der Messdatenverarbeitung eines weiteren Ausführungsbeispiels.

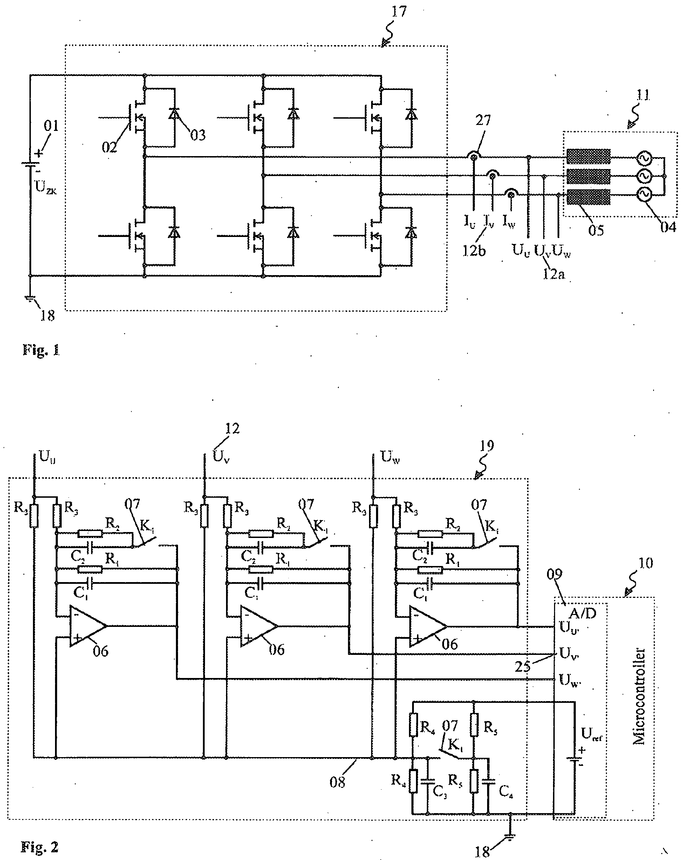

**Fig. 1** zeigt eine typische Ansteuerschaltung 17 eines Regelgeräts eines 3-phasigen Synchronmotors, bestehend aus Gleichspannungszwischenkreis mit Zwischenkreis-Spannungsquelle 01, sechs Schalttransistoren 02 und sechs Freilaufdioden 03. Daran angeschlossen ist ein Synchronmotor 11 mit einer dreiphasigen Motorwicklung 05. Die vom drehenden Rotor (hier nicht dargestellt) in der Wicklung 05 induzierte EMK 04 wird durch drei in Reihe zur Motorwicklung 05 geschaltete EMK-Wechselspannungsquellen 04 repräsentiert, deren Spannungen jeweils um 120° phasenverschoben sind. An die drei Motorphasen 12 ist ein Messverstärker 19, der in **Fig. 2** dargestellt ist, angeschlossen. Wenn die Ansteuerschaltung 17 ausgeschaltet wird, indem alle sechs Schalttransistoren 02 gesperrt werden, ist aufgrund des vor dem Abschalten vorhandenen Stromflusses in den durch die Motorwicklung 05 gebildeten Induktivitäten magnetische Energie gespeichert. Diese wird in sehr kurzer Zeit innerhalb des Messzeitraums *T*ₘ über die Freilaufdioden 03 in den Gleichspannungszwischenkreis zurückgespeist. Während dieser Zeit ist keine EMK-Messung möglich. Wenn die Energie vollständig zurückgespeist wurde, kann einerseits die Motorwicklung 05 mit Hilfe des an den Motorphasen 12 angeschlossenen Messverstärkers 19 - dargestellt in **Fig. 2** **-** auf ein beliebiges für die Messung günstiges Potential festgelegt werden, andererseits kann an den Motorphasen 05 die EMK 04 gemessen werden. Es ist vorteilhaft, wenn die Eingangsimpedanz des an die Motorphasen 12 angeschlossenen Messverstärkers 19 möglichst klein gegen die Masse 18 der Ansteuerschaltung ist. Somit ist sichergestellt, dass Sperrströme in den Schalttransistoren der Ansteuerschaltung 17 keine schädliche Gleichtaktaussteuerung des Messverstärkers 19 bewirken. Falls eine lange Anschlussleitung zwischen Ansteuerschaltung 17 und Motor 11 vorhanden ist, wird die durch die Leitungskapazität bedingte Einschwingzeit der Gleichtaktkomponente bei kleiner Eingangsimpedanz vorteilhaft verkürzt.

**Fig. 2** zeigt beispielhaft eine erfindungsgemäße Ausführung des Messverstärkers 19, bestehend aus drei Operationsverstärkern 06 nebst Beschaltungsnetzwerk C₁, C₂, R₁, R₂, vier gleichzeitig und gleichsinnig betätigten elektronischen Messbereichsschaltern K₁ 07 wie zum Beispiel MOS-Analogschalter zum Umschalten der Verstärkung bzw. Abschwächung, einem Mikrocontroller 10 mit A/D-Kanälen 09 und dem vom Messverstärker 19 gebildeten künstlichen Sternpunkt 08, welcher während der Messung auf das Potential der halben Referenzspannung U_{ref} des A/D-Wandlers 09 gelegt wird, so dass der Aussteuerbereich des A/D-Wandlers 09 optimal ausgenutzt werden kann und eine Gleichtaktaussteuerung des Messverstärkers 19 vermieden wird. Eine Vermeidung der Gleichtaktaussteuerung ist vorteilhaft, weil dann für die aktiven und passiven Komponenten des Messverstärkers 19 kostengünstige Standardbauteile verwendet werden können. Vorteilhaft befinden sich die elektronischen Messbereichsschalter 07 alle gemeinsam auf dem gleichen Chip, so dass der Einfluss von parasitären Effekten wie zum Beispiel ON-Widerstand und Leckstrom verringert werden kann. Dies gilt sinngemäß auch für die Operationsverstärker 06. In diesem Beispiel kann durch den elektronischen Schalter 07 zwischen einer hohen und einer niedrigen Verstärkung bzw. Abschwächung umgeschaltet werden, es sind jedoch auch weitere Verstärkungs- und Abschwächungsstufen denkbar. Grundsätzlich kann die Grenzfrequenz des Messverstärkers beliebig und anwendungsspezifisch gewählt werden. Beispielhaft kann die Grenzfrequenz für beide Verstärkungen auf ca. 3 kHz dimensioniert, was für eine Abtastfrequenz des A/D-Wandlers 09 von etwa 10 kHz eine geeignete Auslegung darstellt. Selbstverständlich können je nach Anwendung und je nach Zwischenkreisspannung auch andere Auslegungen sinnvoll sein. Falls erforderlich können auch weitere umschaltbare Verstärkungen bzw. Dämpfungen mittels weiterer elektronischer Schalter 07 und weiterer Beschaltung hinzugefügt werden. Es ist weiterhin denkbar, dass zwischen Messverstärkerschaltung 19 und A/D-Wandler 09 Anti-Aliasing-Vorrichtungen angeordnet werden. Bei geringen Anforderungen an die Präzision kann Aufwand eingespart werden, indem einer der Operationsverstärker 06 samt Beschaltung weggelassen wird. Die Beschaltung am künstlichen Sternpunkt 08 muss in diesem Fall jedoch anders dimensioniert werden. Es ist auch möglich, mit nur einem Operationsverstärker 06 zu arbeiten, dann steht jedoch kein kontinuierliches Lagesignal zur Verfügung, sondern die Rotorlage kann nur noch mittels Auswertung der Nulldurchgänge detektiert werden (außer dem Wegfall der Offsetproblematik ergeben sich hierdurch jedoch keine Vorteile gegenüber der digitalen Auswertung mittels Komparator gemäß Stand der Technik).

Die Masse der Messverstärkerschaltung 19 wird in der Regel identisch mit der Masse 18 des Gleichspannungszwischenkreises 18 (Fig. 1) sein, zwingend erforderlich ist dies jedoch nicht. Auch ein höheres Potential bis nahe der positiven Spannung der Zwischenkreis-Spannungsquelle 01 ist ohne Modifikation der Messverstärkerschaltung 19 möglich.

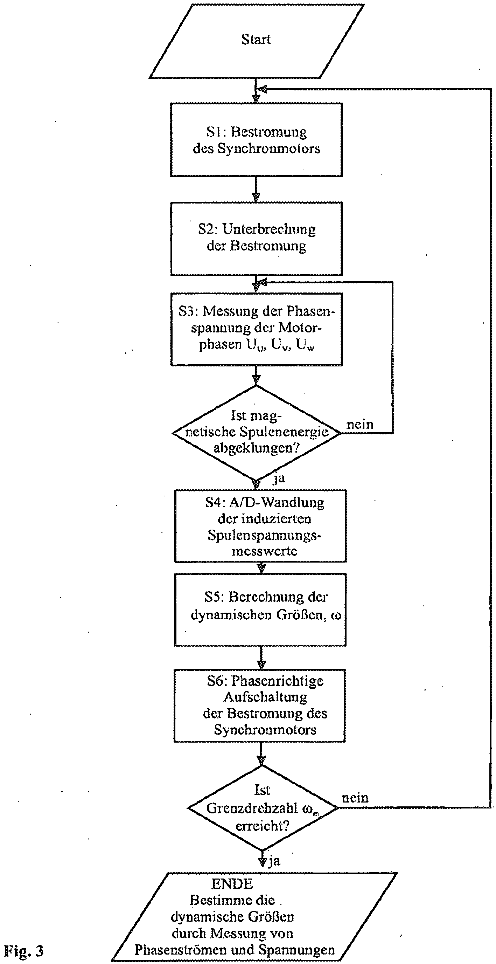

**Fig. 3** zeigt einen Ablaufplan einer Ausführungsform des Verfahrens zur Bestimmung dynamischer Größen mittels EMK-Messung. In jeder Bestimmungsphase werden im Schritt S1 zunächst die einzelnen Motorphasen sinusförmig bestromt. In Schritt S2 wird die Bestromung innerhalb des Messzeitraums *T*_{M} unterbrochen. Anschließend wird während des Zeitraums S3 in diesen Motorphasen eine Messung der Motorphasenmessspannungen U_{U'}, U_{V'}, U_{W'} vorgenommen und hierdurch der Messzeitpunkt *t*ₘ bestimmt, bei dem die in den Motorwicklungen gespeicherte magnetische Energie (magnetische Spulenenergie) abgeklungen ist. Sobald dies durch Entladung der magnetischen Energie über die Freilaufdioden in den Zwischenkreis eingetreten ist, werden die Schritte S4 bis S6 ausgeführt. Danach wird aufgrund des ermittelten Rotorwinkels ϕ eine phasenrichtige Bestromung der stromlosen Motorphasen wieder aufgenommen. Das oben beschriebene Verfahren wird wiederholend durchgeführt, um durchgehend Informationen über die dynamischen Größen des Motors zu erhalten.

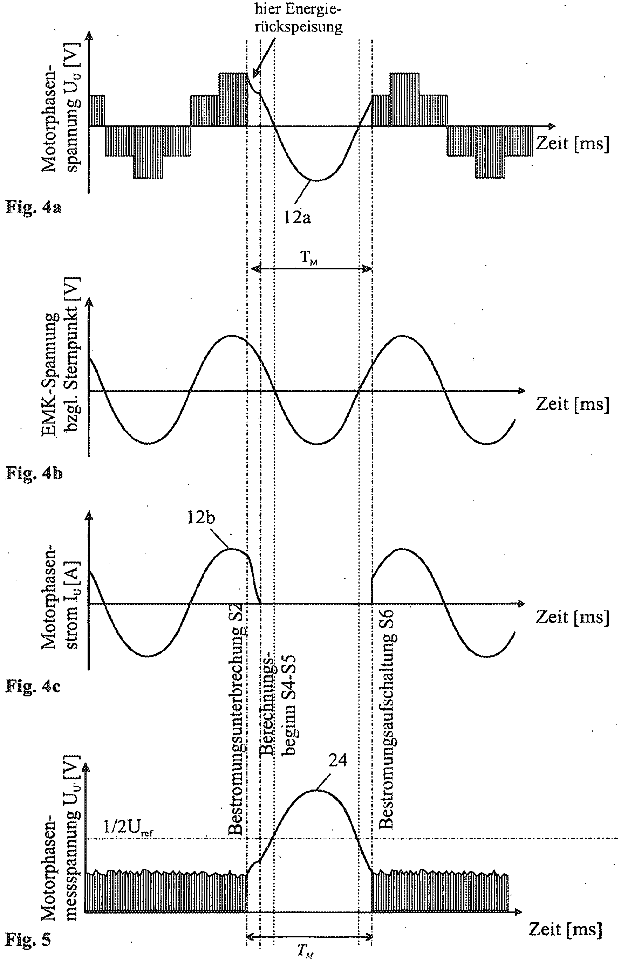

Die **Figs. 4a bis 5** verdeutlichen exemplarisch anhand der Darstellung des zeitlichen Verlaufs einer Motorphasenspannung U_{U} und eines Motorphasenstroms I_{U} den Ablauf des Messverfahrens.

In **Fig. 4a** ist der Verlauf einer PWM-modulierten Motorphasenspannung U_{U} 12a, die der Ansteuerung einer Wicklung eines Mehrphasenstrommotors dient, dargestellt. Bei der Darstellung ist die Zeitdauer der Stromunterbrechung zwecks besserer Erkennbarkeit verlängert worden, er ist in der Praxis um mehrere Größenordnungen kürzer. An den Motorklemmen wird von der Endstufe stets die pulsbreitenmodulierte volle Zwischenkreisspannung aufgeschaltet. Die "Zwischenstufen" der Motorphasenspannung U_{U} ergeben sich durch die Überlagerung der gegen den künstlichen Sternpunkt 08 gemessenen Spannungen aller Halbbrücken des Ansteuerwechselrichters des Motors.

Während der Motor bestromt wird, sind die Messverstärker 06 übersteuert, d.h. die Motorphasenmessspannungen U_{U'}, U_{V'} und U_{W'} 24 sind auf Massepotential oder werden durch die von der Endstufe getakteten Motorphasenspannungen U_{U}, Uv und U_{w} 12a beeinflusst. Nach dem Abschalten des in **Fig. 4c** dargestellten Motorstroms I_{U} 12b am Zeitpunkt der Bestromungsunterbrechung S2 wird ein Abbild der EMK-Spannung, das exemplarisch in **Fig. 4b** dargestellt ist, betrachtet. Die Rückspeisung der in der Motorwicklung gespeicherten Energie, die in **Fig. 4a** dargestellt ist, geschieht dabei in einem Bruchteil des Messzeitraums *T_{M},* so dass die Messverstärker 06 schnell eingeschwungen sind.

Das in **Fig. 4b** dargestellte Diagramm gibt den Verlauf der Motor-EMK-Spannung bezüglich des künstlichen Sternpunktes 08 wieder. Nach Beendigung des Messzeitraums *T_{M}* setzt sich gemäß Fig. 4c der sinusförmige Verlauf des Motorphasenstroms Iᵤ 12b nach der phasenrichtigen Bestromungsaufschaltung in Schritt S6 in Phase mit dem in **Fig. 4b** gezeigten Verlauf der EMK-Spannung fort, da die feldorientierte Regelung aufgrund des Messergebnisses die Motorphasenbestromung mit dem entsprechenden Phasenwinkel phasenrichtig fortsetzt. Dabei wird bezogen auf den künstlichen Sternpunkt 08 darauf geachtet, dass die Motor-EMK und der Phasenstrom zum Motor I_{U} phasengleich verlaufen. Eine fehlerhafte Lageinformation des Verfahrens würde sich in einem geringen Winkelfehler zwischen EMK und Phasenstrom auswirken.

**Fig. 5** stellt den Verlauf der relevanten Motorphasenmessspannung U_{U·} im Messzeitraum *T_{M}* am Ausgang der Messverstärkerschaltung 19 dar. Diese Motorphasenmessspannung wird im Messzeitraum *T_{M}* zu einem oder mehreren Messzeitpunkten *tₘ* A/D-gewandelt. Dabei werden unter Berücksichtigung mindestens einer weiteren Motorphasenmessspannung und eventuell auch Werten vorangegangener Messzeiträume *Tₘ₁* bis *Tₘₙ* die dynamischen Größen 26 bestimmt.

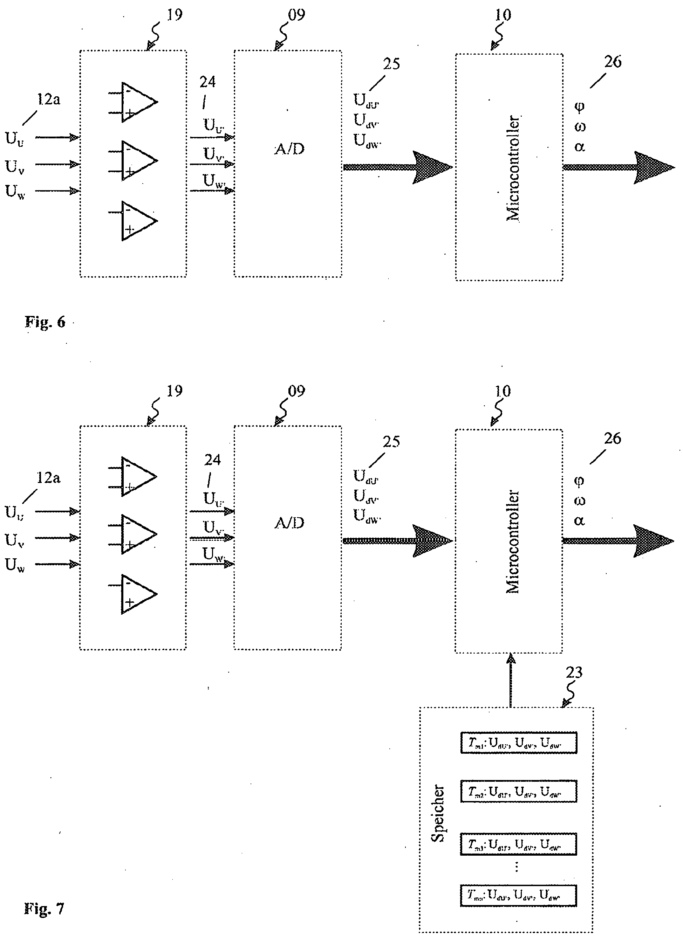

Das in **Fig. 6** dargestellte Blockdiagramm zeigt ein Ausführungsbeispiel einer signaltechnischen Verarbeitung der Messvorrichtung. Darin werden die Motorphasenspannungen U_{U}, Uv und U_{W} 12a eines Synchronmotors 11 erfasst und durch die Messverstärkerschaltung 19 so verstärkt oder abgeschwächt, dass an deren Ausgang dem Auflösungsbereich des A/D-Wandlers 09 angepasste Motorphasenmessspannungen U_{U'}, U_{V'}, U_{W'} bereitgestellt werden. Diese werden an den beispielsweise als ΣΔ-Konverter ausgeführten A/D-Wandler zugeführt, der zu dem Messzeitpunkt *t*ₘ die digitalen Motorphasenspannungsmesswerte U_{dU'}, U_{dV'}, U_{dW'} 25 ausgibt. Diese werden der als Mikrocontroller ausgeführten Recheneineinheit 10 zugeführt, die aufgrund der Relationen der Motorphasenspannungsmesswerte U_{dU'}, U_{dV'}, U_{dW'} 25 und dem Messzeitpunkt *t*ₘ die dynamischen Größen Rotorwinkel ϕ, Rotorfrequenz ω und Rotordrehbeschleunigung α 26 ermittelt.

Eine Erweiterung des in **Fig. 6** dargestellten Blockdiagramms einer signaltechnischen Verarbeitung eines Ausführungsbeispiels ist in Fig. 7. veranschaulicht. Hierbei erfolgt die Verarbeitung der Motorphasenspannungsmesswerte 24 identisch zu dem in **Fig. 6** dargestellten Ausführungsbeispiel, jedoch zieht die Recheneinheit 10 zur Berechnung der dynamischen Größen Rotorwinkel ϕ, Rotorfrequenz ω und Rotordrehbeschleunigung α 26 zuvor abgelegte Motorphasenspannungsmesswerte U_{dU'}, U_{dV'}, U_{dW'} 25 vorausgehender Messzeiträume *T*ₘ₁ bis *Tₘₙ,* die in einem Messwertespeicher 23 zu vergangenen Messzeiträumen abgelegt wurden, in Betracht.

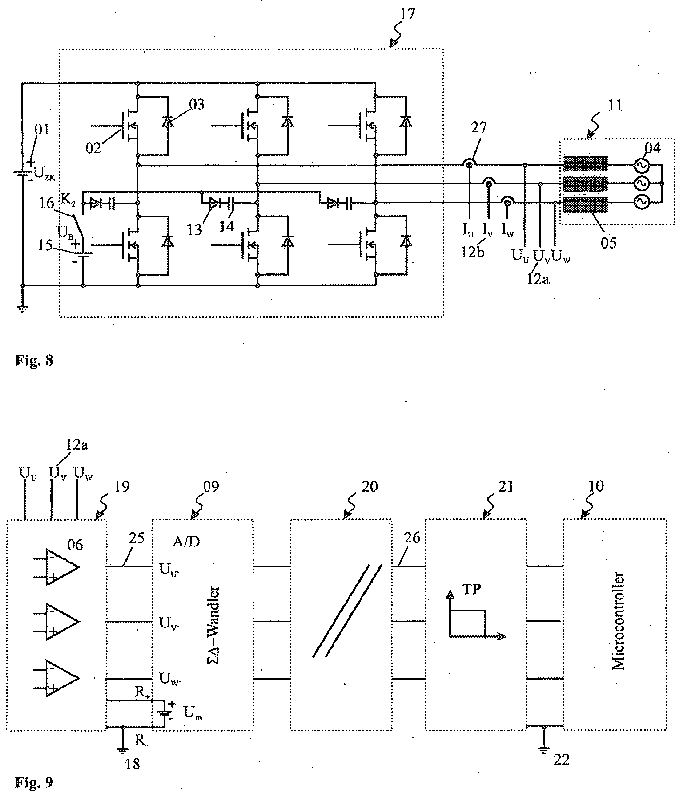

**Fig.8** zeigt eine typische Ansteuerschaltung 17 mit Bootstrapschaltung zur Spannungsversorgung der Treiber (hier nicht dargestellt) der oberen Schalttransistoren 02. Diese Spannungsversorgung wird von den Bootstrapkondensatoren 14 bereitgestellt. Bei Fehlen des elektronischen Schalters 16 entspricht die Anordnung einer gewöhnlichen Bootstrapschaltung. Bei ausgeschalteter Ansteuerschaltung 17 bzw. gesperrten Schalttransistoren 02 wird nach Rückspeisung der in der Motorwicklung 05 gespeicherten Energie das Potential an den Motorphasen 12 gleich der Bootstrap-Versorgungsspannung U_{B} 15 sein, vermindert um die Flussspannung der Bootstrap-Dioden 13 und vermindert um die Ladespannung der Bootstrap-Kondensatoren 14. Dies wird zu einer für die Messgenauigkeit schädlichen Gleichtaktaussteuerung des Messverstärkers 19 führen, welche sich zudem aufgrund der von den Treibern verursachten Entladung der Bootstrap-Kondensatoren 14 zeitlich ändert. Dieser Nachteil kann durch das vorteilhafte Einfügen des elektronischen Schalters 16 in Reihe zur der Bootstrap-Versorgungsspannung 15 vermieden werden. Dieser Schalter K₂ 16 wird während der Messzeit *T*_{M}, vom Mikrocontroller 10 geöffnet, so dass das Bootstrappotential U_{B} während der Messung von der Messverstärkerschaltung abgekoppelt ist.

**Fig. 9** zeigt, dass die Erfindung ebenfalls für direkt vom Stromversorgungsnetz gespeiste Antriebe mit sicherer Trennung zum Mikrocontroller 10 eingesetzt werden kann. Für diesen Fall wird vorteilhaft vorgeschlagen, dass der A/D-Wandler 09 samt Referenzspannung U_{ref} abgesetzt vom Mikrocontroller. 10 angeordnet ist und der A/D-Wandler 09 als ΣΔ-Wandler ausgeführt wird. Die drei EMK-Messsignale (Motorphasenmessspannungen U_{U'}, U_{V'}, U_{W'}, 24) werden digital als Bitstrom (Motorphasenspannungsmesswerte U_{dU'}, U_{dV'}, U_{dW'}, 25) mittels dreier Potentialtrenn-Bauelemente 20 wie zum Beispiel schnelle Optokoppler oder transformatorische I-Koppler übertragen. Nach digitaler Filterung 21 der Bitströme mittels in Hardware ausgeführten Decimation-Filtern (Digitale Filter 21, als integrierte Schaltung erhältlich) können die EMK-Messsignale vom Mikrocontroller 10 digital ausgelesen werden. Auch hier ist im Mikrocontroller eine digitale Differenzbildung zwischen den Messsignalen vorteilhaft, da auf diese Weise schädliche Einflüsse der gesamten Übertragungsstrecke verringert werden können. Der Messverstärker 19 unterscheidet sich nicht von der in **Fig. 2** dargestellten Schaltung, lediglich die Dimensionierung der Bauteile ist an die höhere Zwischenkreisspannung anzupassen. Wie in **Fig. 2** kann auch hier Aufwand eingespart werden, indem bis zu zwei Übertragungskanäle weggelassen werden.

## Patentansprüche

1. Verfahren zur wiederholten Bestimmung dynamischer Größen (26) eines n-phasigen Synchronmotors (11), insbesondere Rotorwinkel und Rotorfrequenz ω, mittels Messung von induzierten Motorphasenspannungen (12a), die in jeder Bestimmungsphase folgende Schritte umfasst:
- Bestromung des Synchronmotors (11) durch eine sinuskommutierende Ansteuerschaltung (17) (S1);
- Kurzfristige Unterbrechung der Bestromung von mindestens zwei Motorphasen (12) des Synchronmotors für einen Messzeitraum *T*_{M}, bis deren magnetische Energie abgeklungen ist, um in diesem Messzeitraum *T*_{M} die Motorphasenspannungen (U_{U}, U_{V}, U_{W}) (12a) zu messen (S2);
- Messung der Motorphasenspannungen (U_{U}, Uv, U_{W}) (12a) in den mindestens zwei Motorphasen (12) des Asynchronmotors (11) mittels einer analogen Messverstärkerschaltung (19) zur Erzeugung von Motorphasenmessspannungen (U_{U'}, U_{V'}, U_{w'}) (24) zu mindestens einem Messzeitpunkt *t*ₘ(S3), wobei die Messverstärkerschaltung (19) eine einstellbare Verstärkung oder Abschwächung aufweist, so dass insbesondere in Abhängigkeit der Motorphasenspannungen (U_{U}, Uv, U_{w}) (12a) und/oder den bisher bestimmten dynamischen Größen (26) eine Messverstärkung (07) eingestellt wird und wobei während der Unterbrechung der Bestromung im Messzeitraums *T*ₘ. und zumindest bei Messung der Motorphasenspannungen (U_{U}, U_{V}, U_{w}) (12a) zum Messzeitpunkt *t*ₘ ein Sternpunkt (08) der Motorphasen (12) auf ein Messpotential Uₘ=U_{ref}/2 gelegt wird, das in der Mitte des Aussteucrbereichs U_{ref} des A/D-Wandlers (09) liegt;
- A/D-Wandlung der analogen Motorpbasenmessspannungen (U_{U}, U_{V'}, U_{w}) im Messzeitpunkt *t*ₘ zur Bestimmung digitaler Motorphasenspannungsmesswerte (U_{dU'}, U_{dV'}, U_{dW'})(25, S4);
- Berechnung der dynamischen Größen auf Basis der gemessenen digitalen Motorphasenspannungsmesswerte (U_{dU'}, U_{dV'}, U_{dW'}) (25) mittels einer Recheneinheit (10) (S5);
- phasenrichtige Aufschaltung der Bestromung des Synchronmotors (11) (S6).

2. Verfahren nach Anspruch 1,
**dadurch gekennzeichnet,**
**dass** das Verfahren bis zur Erreichung einer Grenzrotorfrequenz ωₘ des Synchronmotors (11) ausgeführt wird, und nach Überschreiten der Grenzrotorfrequenz ωₘ die dynamischen Größen (26) durch Berechnen aus den aufgeschalteten Motorphasenspannungen (U_{U}, Uv, U_{W}) (12a) und den gemessenen Motorphasenströme (I_{U}, Iv, I_{W}) (12b) bestimmt werden.

3. Verfahren nach Anspruch 1 order 2,
**dadurch gekennzeichnet,**
**dass** der Messzeitraum *T*_{M} der kurzfristigen Unterbrechung der Bestromung und der Messzeitpunkt *t*ₘ in jeder Bestimmungsphasc neu bestimmt werden.

4. Verfahren nach Anspruch 3
**dadurch gekennzeichnet,**
**dass** der Messzeitraum *T*_{M} der kurzfristigen Unterbrechung der Bestromung und der Messzeitpunkt *t*ₘ durch Messung der Motorphascnströmc (I_{U}, I_{V}, I_{W}) (12b) und/oder den bisher bestimmten dynamischen Größen (26) und/oder einem Motorkennfeld bestimmt werden.

5. Verfahren nach einem der vorangegangenen Ansprüche,
**dadurch gekennzeichnet,**
**dass** während eines stromlosen Leerlaufs des Synchronmotors (11) die Verfahrensschritte zur Bestimmung der dynamischen Größen (26) ohne den Schritt der Bestromung durchgeführt werden, um die Ansteuerschaltung (17) auf die Rotorfrequenz ω zu synchronisieren und den Synchronmotor (11) wieder in den bestromten Zustand zu versetzen, womit eine Aufsynchronisierungstattfindet.

6. Verfahren nach einem der vorangegangenen Ansprüche,
**dadurch gekennzeichnet,**
**dass** bei Verwendung einer Bootstrapschaltung in der Ansteuerschaltung (17) während der Unterbrechung der Bestromung im Messzeitraum *T*ₘ und zumindest bei Messung der Motorphasenspannungen (U_{U}, Uv, U_{W}) (12a) im Messzeitpunkt *t*ₘ, das Bootstrappotential U_{B} (15) von den Motorphasen (12) mittels eines Schalters (K₂) abgekoppelt wird.

7. Vorrichtung zur kontinuierlichen Bestimmung dynamischer Größen (26) eines n-phasigen Synchronmotors (11), insbesondere Rotorwinkel ϕ und Rotorfrequenz ω, mittels Messung von induzierten Motorphasenspannungen (12a), die eine Ansteuerschaltung (17), eine Messverstärkercinrichtung (19) und eine Recheneinheit (10) umfasst, wobei die Messverstärkercinrichtung (19) mindestens zwei Motorphasenspannungen (12a) analog misst und die Vorrichtung des weiteren einen mindestens zweikanaligen A/D-Wandler (09) umfasst,
**dadurch gekennzeichnet,**
**dass** die Recheneinheit (10) zumindest mittelbar so mit der Anstcucrschaltung (17) und dem A/D-Wandler (09) und der Messverstärkereinrichtung (19) verbunden ist, dass während eines Messzeitraums *T*ₘ die Motorphasenspannungen (U_{U}, U_{V}, U_{w}) (12a) gemessen und mittels der Messverstärkereinrichtung (19) zum Messzeitpunkt *t*ₘ zu den analogen Motorphasenmessspannungen (U_{U'}, U_{V'}, U_{W'}) (24) verstärkt oder abgeschwächt werden, wobei die Messverstärkereinrichtung (19) eine einstellbare Verstärkung oder Abschwächung (K₁) (07) aufweist, um insbesondere in Abhängigkeit der Größe der Motorphasenspannungen (U_{U}, U_{V}, U_{w}) (12a) und/oder den bisher bestimmten dynamischen Größen (26) eine für den Aussteuerbereich des A/D-Wandlers (09) angepasste Mcssvcrstärkung einzustellen und wobei ein Stcrnpunkt (08) der Motorphasen (12) zumindest zum Messzeitpunkt *t*ₘ auf ein Messpotential Uₘ=U_{ref}/2 gelegt wird, das in der Mitte des Aussteuerbereichs U_{ref} des A/D-Wandlers (09) liegt, und anschließend mittels des A/D-Wandlers (09) im Messzeitpunkt *t*ₘ die digitalen Motorphasenspannungsmesswerte (U_{dU'}, U_{dV'}, U_{dW'}) (25) bestimmt werden, auf deren Basis die Recheneinheit (10) die dynamischen Größen (26) ermittelt und phasenrichtig die Bestromung der Motorphasen (12) wieder aufnimmt.

8. Vorrichtung nach Anspruch 7,
**dadurch gekennzeichnet,**
**dass** die Vorrichtung des weiteren mindestens zwei Strommesseinrichtungen (27) umfasst, um insbesondere die Motorphasenströme (I_{U}, Iv, I_{W}) (12b) zu messen und hieraus das Abklingen der magnetischen Energie der Motorphasen (12) zu bestimmen, um einen Messzeitpunkt *t*ₘ innerhalb eines Messzeitraums *T*ₘ zu bestimmen, und/oder bei Erreichung einer Rotorgrenzfrequenz ωₘ die dynamischen Größen unterbrechungsfrei aus den aufgeschalteten Motorphasenspannungen (U_{U}, U_{V}, U_{w}) (12a) und den gemessenen Motorphasenströmen (I_{U}, I_{V}, I_{w}) (12b) zu berechnen.

9. Vorrichtung nach einem der vorangegangenen Vorrichtungsansprüche,
**dadurch gekennzeichnet,**
**dass** die Recheneinheit (10) so mit der Ansteuerschaltung (17) verbunden ist, dass sie im unbestromten Leerlauf des Synchronmotors (11) die dynamischen Größen (26) erfasst, die Ansteuerschaltung (17) auf die Rotorfrequenz ω synchronisiert, und den Synchronmotor (11) in den bestromten Zustand versetzt, womit eine Aufsynchronisierung stattfindet.

10. Vorrichtung nach einem der vorangegangenen Vorrichtungsansprüche,
**dadurch gekenntzeichnet,**
dass die Vorrichtung des weiteren eine Potentialtrennschaltung (20) umfasst, die entweder zwischen Messverstärkerschaltung (19) und A/D-Wandler (09) oder zwischen A/D-Wandler(09) und Recheneinheit (10) angeordnet ist und die Messverstärkerschaltung (19) galvanisch von der Recheneinheit (10) trennt.

11. Vorrichtung nach einem der vorangegangenen Vorrichtungsansprüche,
**dadurch gekennzeichnet,**
**dass** die Vorrichtung des weiteren eine Drehfrequenzanalysevorrichtung umfasst, die bei Erreichung einer Grenzrotorfrequenz ωₘ die Bestimmung der dynamischen Größen (26) unterbrechungslos durch Messung und Analyse der Motorphasenspannungen (U_{U}, Uv, U_{W}) (12a) und Motorphasenströme (I_{U}, I_{V}, I_{W}) (12b) bestimmt.

## Claims

1. A method for repeated determination of dynamic parameters (26) of an n-phase synchronous motor (11), in particular of the rotor angle ϕ and of the rotor frequency ω, by measuring induced motor phase voltages (12a), comprising, in each determination phase, the following steps:
- feeding current to the synchronous motor (11) through a sine-commutating trigger circuit (17) (S1);
- briefly interrupting the current feed of at least two motor phases (12) of the synchronous motor for a measuring period T_{M} until their magnetic energy has faded in order to measure the motor phase voltages (U_{U}, U_{V}, U_{w}) (12a) in said measuring period T_{M} (S2);
- measuring the motor phase voltages (U_{U}, U_{V}, U_{w}) (12a) in the at least two motor phases (12) of the synchronous motor (11) using an analog measurement amplifier circuit (19) for generating motor phase measuring voltages (U_{U}, U_{V'}, U_{W'}) (24) at at least one time of measurement tₘ (S3), the measurement amplifier circuit (19) having an adjustable amplification or attenuation so that a measurement amplification (07) is set in particular as a function of the motor phase voltages (U_{U}, U_{V}, U_{W}) (12a) and/or of the previously determined dynamic parameters (26), and a neutral point (08) of the motor phases (12) being connected to a measuring potential Uₘ = U_{ref} / 2 which is in the middle of the dynamic range U_{ref} of the A/D converter (09) during the interruption of the current feed in the measuring period T_{M} and at least when measuring the motor phase voltages (U_{U}, Uv, U_{W}) (12a) at the time of measurement tₘ;
- A/D-converting the analog motor phase measuring voltages (U_{U'}, U_{V'}, U_{w'}) at the time of measurement tₘ to determine digital measured values (U_{dU'}, U_{dV'}, U_{dV'}) of the motor phase voltages (25, S4);
- calculating the dynamic parameters on the basis of the measured digital measured values (U_{dU'}, U_{dV'}, U_{dW'}) (25) of the motor phase voltages using a calculating unit (10) (S5);
- connecting the current feed of the synchronous motor (11) to the correct phases (S6).

2. The method according to claim 1,
**characterized in that**
the method is performed until a threshold rotor frequency ωₘ of the synchronous motor (11) is achieved, and once the threshold rotor frequency ωₘ has been exceeded, the dynamic parameters (26) are determined by being calculated from the connected motor phase voltages (U_{U}, U_{V}, U_{w}) (12a) and from the measured motor phase currents (I_{U}, Iv, I_{W}) (12b).

3. The method according to claim 1 or 2,
**characterized in that**
the measuring period T_{M} of the brief interruption of the current feed and the time of measurement tₘ are determined anew in each determination phase.

4. The method according to claim 3,
**characterized in that**
the measuring period T_{M} of the brief interruption of the current feed and the time of measurement tₘ are determined by measuring the motor phase currents (I_{U}, I_{V}, I_{w}) (12b) and/or the previously determined dynamic parameters (26) and/or a motor characteristic map.

5. The method according to any one of the preceding claims, **characterized in that**
during dead idling of the synchronous motor (11), the method steps for determining the dynamic parameters (26) are performed without the step of feeding current so as to synchronize the trigger circuit (17) to the rotor frequency ω and to return the synchronous motor (11) to the live state, synchronization thus taking place.

6. The method according to any one of the preceding claims, **characterized in that**
when using a bootstrap circuit in the trigger circuit (17) during the interruption of the current feed in the measuring period T_{M} and at least when measuring the motor phase voltages (U_{U}, U_{V}, U_{W}) (12a) at the time of measurement tₘ, the bootstrap potential U_{B} (15) is decoupled from the motor phases (12) by means of a switch (K₂).

7. A device for continuous determination of dynamic parameters (26) of an n-phase synchronous motor (11), in particular of the rotor angle ϕ and of the rotor frequency ω, by measuring induced motor phase voltages (12a), comprising a trigger circuit (17), a measurement amplifier device (19) and a calculating unit (10), the measurement amplifier device (19) analogously measuring at least two motor phase voltages (12a) and the device further comprising an A/D converter (09) with at least two channels,
**characterized in that**
the calculating unit (10) is at least indirectly connected to the trigger circuit (17) and to the A/D converter (09) and to the measurement amplifier device (19) in such a manner that the motor phase voltages (U_{U}, U_{V}, U_{W}) (12a) are measured during a measuring period T_{M} and amplified or attenuated at the time of measurement tₘ by means of the measurement amplifier device (19) into the analog measuring voltages (U_{U'}, U_{V'}, U_{w'}) (24) of the motor phases, the measurement amplifier device (19) having an adjustable amplification or attenuation (K₁) (07) so as to set a measurement amplification that is adjusted for the dynamic range of the A/D converter (09) in particular as a function of the level of the motor phase voltages (U_{U}, U_{V}, U_{W}) (12a) and/or of the previously determined dynamic parameters (26), and a neutral point (08) of the motor phases (12) being connected to a measuring potential Uₘ = U_{ref} / 2 which is in the middle of the dynamic range U_{ref} of the A/D converter (09) at least at the time of measurement tₘ, and the digital measured values (U_{dU'}, U_{dV'}, U_{dW'}) (25) of the motor phase voltages being subsequently determined by means of the A/D converter (09) at the time of measurement tₘ, on the basis of which the calculating unit (10) determines the dynamic parameters (26) and returns to feeding current to the correct motor phases (12).

8. The device according to claim 7,
**characterized in that**
the device further comprises at least two current measuring devices (27) to measure in particular the motor phase currents (I_{U}, I_{V}, I_{w}) (12b) and to determine therefrom the fading of the magnetic energy of the motor phases (12) in order to determine a time of measurement tₘ within a measuring period T_{M} and/or to calculate the dynamic parameters without interruption from the connected motor phase voltages (U_{U}, U_{V}, U_{W}) (12a) and from the measured motor phase currents (I_{U}, I_{V}, I_{W}) (12b) when a rotor threshold frequency ωₘ is reached.

9. The device according to any one of the preceding device claims,
**characterized in that**
the calculating unit (10) is connected to the trigger circuit (17) in such a manner that it registers the dynamic parameters (26) during dead idling of the synchronous motor (11), synchronizes the trigger circuit (17) to the rotor frequency ω and puts the synchronous motor (11) in the live state, synchronization thus taking place.

10. The device according to any one of the preceding device claims,
**characterized in that**
the device further comprises an isolation circuit (20), which is arranged either between the measurement amplifier circuit (19) and the A/D converter (09) or between the A/D converter (09) and the calculating unit (10) and which galvanically isolates the measurement amplifier circuit (19) from the calculating unit (10).

11. The device according to any one of the preceding device claims,
**characterized in that**
the device further comprises a rotating frequency analyzing device, which determines the dynamic parameters (26) without interruption by measuring and analyzing the motor phase voltages (U_{U}, U_{V}, U_{w}) (12a) and the motor phase currents (I_{U}, I_{V}, I_{W}) (12b) when a threshold rotor frequency ωₘ is reached.

## Revendications

1. Procédé pour la détermination répétée de paramètres dynamiques (26) d'un moteur synchrone (11) à n phases, en particulier de l'angle de rotor ϕ et de la fréquence de rotor ω, en mesurant des tensions induites des phases de moteur (12a), le procédé comprenant dans chaque phase de détermination les étapes suivantes :
- alimenter en courant le moteur synchrone (11) par un circuit de commande à commutation sinusoïdale (17) (S1);
- interrompre pour peu de temps l'alimentation en courant d'au moins deux phases de moteur (12) du moteur synchrone pour une période de mesure T_{M} jusqu'à l'extinction de leur énergie magnétique afin de mesurer les tensions des phases de moteur (U_{U}, U_{V}, U_{W}) (12a) dans cette période de mesure T_{M} (S2) ;
- mesurer les tensions des phases de moteur (U_{U}, U_{V}, U_{W}) (12a) dans les au moins deux phases de moteur (12) du moteur synchrone (11) à l'aide d'un circuit d'amplification de mesure analogue (19) pour la génération de tensions de mesure des phases de moteur (U_{U'}, U_{V'}, U_{W'}) (24) à au moins un moment de mesure tₘ (S3), le circuit d'amplification de mesure (19) présentant une amplification ou une atténuation réglable de sorte qu'une amplification de mesure (07) est réglée en particulier en fonction des tensions des phases de moteur (U_{U}, U_{V}, U_{W}) (12a) et/ou des paramètres dynamiques (26) déterminés jusqu'à présent, et un point neutre (08) des phases de moteur (12) étant connecté à un potentiel de mesure Um = U_{ref} / 2 qui est au milieu de la plage dynamique U_{ref} du convertisseur A/N (09) pendant l'interruption de l'alimentation en courant dans la période de mesure T_{M} et au moins lors de la mesure des tensions des phases de moteur (U_{U}, U_{V}, U_{W}) (12a) au moment de mesure tₘ ;
- conversion A/N des tensions de mesure analogues des phases de moteur (U_{U'}, U_{V'}, U_{W'}) au moment de mesure tₘ afin de déterminer des valeurs mesurées numériques de tension des phases de moteur (U_{dU'}, U_{dV'}, U_{dW'}) (25, S4) ;
- calculer les paramètres dynamiques sur la base des valeurs mesurées numériques des phases de moteur (U_{dU'}, U_{dV'}, U_{dW'}) (25) par une unité de calcul (10) (S5) ;
- connecter l'alimentation en courant du moteur synchrone (11) en respectant les phases (S6).

2. Procédé selon la revendication 1,
**caractérisé en ce que**
le procédé est effectué jusqu'à ce qu'une fréquence limite de rotor ωₘ du moteur synchrone (11) est atteinte, et après le dépassement de la fréquence limite de rotor ωₘ, les paramètres dynamiques (26) sont déterminés en étant calculés à partir des tensions connectées des phases de moteur (U_{U}, U_{V}, U_{W}) (12a) et des courants mesurés des phases de moteur (I_{U}, I_{V}, I_{W}) (12b).

3. Procédé selon la revendication 1 ou la revendication 2,
**caractérisé en ce que**
la période de mesure T_{M} de l'interruption pour peu de temps de l'alimentation en courant et le moment de mesure tₘ sont déterminés à nouveau dans chaque phase de détermination.

4. Procédé selon la revendication 3,
**caractérisé en ce que**
la période de mesure T_{M} de l'interruption pour peu de temps de l'alimentation en courant et le moment de mesure tₘ sont déterminés en mesurant les courants des phases de moteur (I_{U}, I_{V}, I_{W}) (12b) et/ou les paramètres dynamiques (26) déterminés jusqu'à présent et/ou une cartographie du moteur.

5. Procédé selon l'une quelconque des revendications précédentes,
**caractérisé en ce que**
pendant un ralenti sans courant du moteur synchrone (11), les étapes du procédé pour la détermination des paramètres dynamiques (26) sont effectuées sans l'étape de l'alimentation en courant afin de synchroniser le circuit de commande (17) sur la fréquence de rotor ω et remettre le moteur synchrone (11) dans l'état sous courant, une synchronisation se déroulant.

6. Procédé selon l'une quelconque des revendications précédentes,
**caractérisé en ce qu'**
en cas de l'utilisation d'un circuit de type bootstrap dans le circuit de commande (17) pendant l'interruption de l'alimentation en courant dans la période de mesure T_{M} et au moins lors de la mesure des tensions des phases de moteur (U_{U}, Uv, U_{w}) (12a) au moment de mesure tₘ, le potentiel de bootstrap U_{B} (15) est découplé des phases de moteur (12) par un interrupteur (K₂).

7. Dispositif pour la détermination continue de paramètres dynamiques (26) d'un moteur synchrone (11) à n phases, en particulier de l'angle de rotor ϕ et de la fréquence de rotor ω, par la mesure de tensions induites des phases de moteur (12a), qui comprend un circuit de commande (17), un dispositif d'amplification de mesure (19) et une unité de calcul (10), le dispositif d'amplification de mesure (19) mesurant de manière analogue au moins deux tensions des phases de moteur (12a) et le dispositif comprenant en outre au moins un convertisseur A/N (09) à deux canaux,
**caractérisé en ce que**
l'unité de calcul (10) est connectée au moins indirectement au circuit de commande (17) et au convertisseur A/N (09) et au dispositif d'amplification de mesure (19) de telle manière que les tensions des phases de moteur (U_{U}, U_{V}, U_{W}) (12a) sont mesurées pendant une période de mesure T_{M} et sont amplifiées ou atténuées au moment de mesure tₘ vers les tensions de mesure analogues des phases de moteur (U_{U'}, U_{V'}, U_{W'}) (24) par le dispositif d'amplification de mesure (19), le dispositif d'amplification de mesure (19) présentant une amplification ou atténuation (K₁) (07) réglable afin de régler une amplification de mesure ajustée à la plage dynamique du convertisseur A/N (09) en particulier en fonction de la valeur des tensions des phases de moteur (U_{U}, U_{V}, U_{W}) (12a) et/ou des paramètres dynamiques (26) déterminés jusqu'à présent, et un point neutre (08) des phases de moteur (12) étant connecté, au moins au moment de mesure tₘ, à un potentiel de mesure Um = U_{ref} / 2 qui est au milieu de la plage dynamique U_{ref} du convertisseur A/N (09), et puis les tensions de mesure numériques des phases de moteur (U_{dU'}, U_{dV'}, U_{dW'}) (25) étant déterminées au moment de mesure tₘ par le convertisseur A/N (09), sur la base desquelles l'unité de calcul (10) détermine les paramètres dynamiques (26) et reprend l'alimentation en courant des phases de moteur (12) en respectant les phases.

8. Dispositif selon la revendication 7,
**caractérisé en ce que**
le dispositif comprend en outre au moins deux dispositifs de mesure de courant (27) destiné à mesurer en particulier les courants des phases de moteur (I_{U}, I_{V}, I_{W}) (12b) et en déterminer l'extinction de l'énergie magnétique des phases de moteur (12) afin de déterminer un moment de mesure tₘ durant une période de mesure T_{M} et/ou calculer sans interruption les paramètres dynamiques à partir des tensions des phases de moteur (U_{U}, U_{V}, U_{W}) (12a) appliquées et des courants de phases de moteur (I_{U}, I_{V}, I_{W}) (12b) mesurés quand une fréquence limite de rotor ωₘ est atteinte.

9. Dispositif selon l'une quelconque des revendications de dispositif précédentes,
**caractérisé en ce que**
l'unité de calcul (10) est connectée au circuit de commande (17) de telle manière qu'elle saisit les paramètres dynamiques (26) lors du ralenti sans courant du moteur synchrone (11), synchronise le circuit de commande (17) sur la fréquence de rotor ω et met le moteur synchrone (11) dans l'état sous courant, une synchronisation se déroulant.

10. Dispositif selon l'une quelconque des revendications de dispositif précédentes,
**caractérisé en ce que**
le dispositif comprend en outre un circuit de séparation de potentiel (20), qui est disposé ou entre le circuit d'amplification de mesure (19) et le convertisseur A/N (09) ou entre le convertisseur A/N (09) et l'unité de calcul (10) et sépare galvaniquement le circuit d'amplification de mesure (19) de l'unité de calcul (10).

11. Dispositif selon l'une quelconque des revendications de dispositif précédentes,
**caractérisé en ce que**
le dispositif comprend en outre un dispositif d'analyse de fréquence de rotation, qui détermine les paramètres dynamiques (26) sans interruption en mesurant et analysant les tensions des phases de moteur (U_{U}, U_{V}, U_{W}) (12a) et les courants des phases de moteur (I_{U}, I_{V}, I_{W}) (12b) quand une fréquence limite de rotor ωₘ est atteinte.
